(19) **Europäisches Patentamt / European Patent Office / Office européen des brevets**

(11) **EP 1 887 478 A1**

(12) **EUROPEAN PATENT APPLICATION**

(43) Date of publication:
**13.02.2008 Bulletin 2008/07**

(51) Int Cl.:
***G06F 17/24*** *(2006.01)*

(21) Application number: **06117765.5**

(22) Date of filing: **24.07.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Coskun, Fatih**<br>**81735, Munich (DE)**<br>• **De Luca, Alexander**<br>**80333, Munich (DE)** |
| (71) Applicant: **NTT DoCoMo, Inc.**<br>**Tokyo (JP)** | (74) Representative: **Betten & Resch**<br>**Patentanwälte**<br>**Theatinerstrasse 8**<br>**80333 München (DE)** |
| (72) Inventors:<br>• **Noda, Chie**<br>**80796, Munich (DE)** | Remarks:<br>Amended claims in accordance with Rule 137(2) EPC. |

(54) **Apparatus for automatic form filling on mobile devices**

(57) An apparatus for automatic rule-based fill-in of web forms. Groups of input fields in the form are detected based on neighbourhood data. Group rules are then used to determine which group concept, for example an address, is represented by each group of fields. Inner rules are then used to determine which of the fields in the group correspond to particular items of user data to be filled in. The form is then filled in based on the results of the above analysis.

Fig. 6

**Description**

FIELD OF INVENTION

The present invention relates generally to a method and an apparatus for automatic form filling, particularly on mobile devices.

BACKGROUND ART

For automatically filling forms there has been proposed a mechanism in European Patent Application No. 05109753.3 which will be briefly described in the following, because the embodiments of the present invention are related to this application, and it in part makes use of similar mechanisms such as a "concept name" and a "rule".

In the proposed form filling method of European Patent Application No. 05109753.3 a rule consists of a value (which may be a character string, a number, or the like) and its location with respect to the input field which is being analysed. The rule being fulfilled means that at the location with respect to the input field as defined by the rule there is located the value defined by the rule. A rule being fulfilled leads to a predefined concept name which corresponds to this rule and which is to be used to fill this input field of the form. Every rule further includes also its own pre-defined probability (the probability that indeed the input field should be filled with the concept name corresponding to this rule), based on evaluation of a big amount of online available forms for automatic form filling. This means that the probability or score for every rule is pre-defined and doesn't have to be computed during the input field checking, which saves CPU time on the mobile device. The form filler just has to check which rules fit to the input field.

Based on the result of the check the user data is used by the form filler according to the matched rules, to fill out the form with the user data. For that purpose, e.g. in the data structure storing the user data, several concept names like *FirstName* for the first name of the user must de defined to identify the corresponding user data. The concept names are then used to map the user data to fill in input fields. For details reference is made to the application EP 05109753.3 which is incorporated herein by reference.

To create the form filling rules, one can analyze existing forms on web pages. For details reference is also made to European Patent Application EP 05109753.3.

However, when conducting such an analysis, one finds out that there are a lot of similarities on requested concept names and the placement of input fields in the forms. So the probability that an input field which is labeled with *First Name* should be filled with the first name of the user is extremely high. Just as a remark it should be mentioned here that the user data consisting of the first name of the user may correspond to the e.g. the concept name (i.e. the internal labeling of the corresponding user data) FirstName or any other identifier used as a concept name of the first name of the user.

Furthermore the context of input fields can also be important. With context it is meant here how this concrete input field is defined (e.g. by HTML statements or other "source code" statements) and which text or other form elements are around it. For example, there is a certain probability that after the first name the last name is requested in a form.

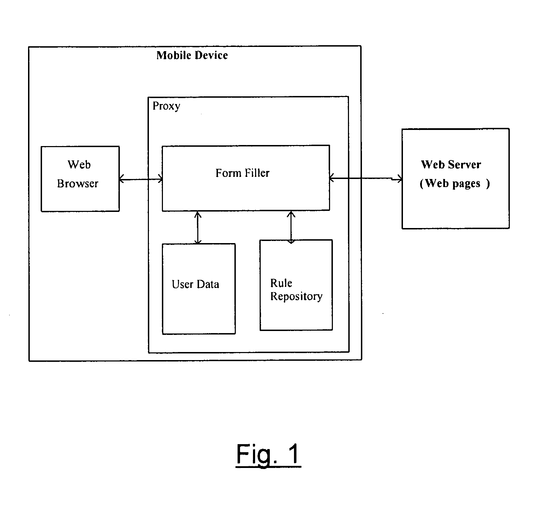

A set of rules may be stored in an automatic form filling apparatus as depicted in Figure 1.

Rules may be regarded as defining a condition which is to be checked, and a conclusion to be drawn if the condition is found to be fulfilled. The condition of the rule may define that a certain parameter, e.g. a certain part of the HTML document defining the input form, must assume a certain value if the condition should be regarded as being fulfilled. Such a parameter may e. g. be the label of an input field. The label of the input field is e. g. the text string which is displayed on the browser directly in front of the input field. Another parameter may be the Name Attribute of the input field in the source code representation of the input form.

The conclusion of the rule may be the value to be inserted into the input field if the condition is found to be fulfilled. In the following description the conclusion is often referred to as concept name which is to be understood as identifying a particular predefined user data, e. g. the first name, the surname, the date of birth, the age, etceteras. A certain concept name is an identifier for one particular type of user data.

So a general expression of a rule may look as follows:

Parameter value - concept name

Such a rule may be applied to a specific input field which means that it is checked for this input field to which the rule is applied whether the parameter of this field in the input form assumes the parameter value as defined in the rule. If so, the condition is met and the conclusion can be drawn which means that the rule indicated that the thus checked input field should be filled using the user data identified by the concept name defined in the rule.

As mentioned already, in one embodiment different parameters may be used to create rules, e. g. the label of an input field and its Name Attribute. Moreover, these parameters need not to relate to the input field to which the rule is applied but may relate to a parameter of a different input field (e. g. a preceding (upper) or a succeeding (lower) input field) compared to the input field to which the rule is applied. This leads then to the following six parameters which according to one embodiment may be parameters of a rule:

    Upper LABEL: the last text before of the upper input field
    Upper NAME_ATTRIBUTE_VALUE: the value of the name attribute of the upper input field

Current LABEL: the last text before of the current input field (the actual input field to which the rule is applied)

CURRENT NAME_ATTRIBUTE_VALUE: the value of the name attribute of the current input field

Lower LABEL: the last text before of the lower input field

Lower NAME_ATTRIBUTE_VALUE: the value of the name attribute of the lower input field

Upper here refers to the previous input field found in the HTML document before the current one to which the rule is applied. Lower is the first input field found after the current one. One can see that in this example a rule in addition to a parameter contains an indication of the location of the parameter with respect to the input field currently being checked (the input field to which the rule applies).

In one embodiment each rule furthermore has assigned a score which indicates the likelihood that the conclusion is true if the condition is fulfilled. This score may actually in one embodiment be the likelihood of the conclusion being correct. The likelihood may be derived from a statistical evaluation of existing input forms, and it may furthermore be dynamically updated as will be explained later.

In one embodiment a rule repository is to store rules, which conform to the following syntax or schema:

Parameter |Operator |Value| concept name |Score , whereby

Position = {UPPER_LABEL, UPPER_NAME_ATTRIBUTE_VALUE,

CURRENT_LABEL, CURRENT_NAME_ATTRIBUTE_VALUE, LOWER_LABEL,

LOWER_NAME_ATTRIBUTE_*VALUE*}

Operator = {CONTAINS, EQUALS}

Value = arbitrary String, e.g. a label tag, the string just before the form, the name attribute of the form, in other words the value which the parameter assumes concept name = element of the user data (i.e. to be used to fill in the form), e.g. FirstName

Score = number between 0 and 100 representing likelihood

The part <Parameter |Operator| Value > forms the condition of the rule.

If the Parameter has the relationship with the Value as defined by the operator the condition is fulfilled, and the conclusion may be drawn with a Probability indicated by Score that the concept name y has to be filled into the input field to which this rule has been applied.

In other words, the rules as defined above consist of the following elements, namely

a) a condition which is checked (i.e. is at a certain location with respect to the input field being analyzed a certain value existing). This condition is represented in the rule above by the part Parameter | Operator | Value. The value may refer to the value which a certain variable takes, the variable may e.g. be a label which is contained in the form and labels the input field, or it may be a label which actually refers to the name of the input field in the source code of the form, this kind of label is referred to above by the string NAME_ATTRIBUTE_*VALUE*

b) A concept name specific for this rule and a probability with which the concept name which corresponds to the rule identifies the user data to be used for filling

In the following some examples for rules are listed together with a corresponding explanation of their meaning:

- *CURRENT_NAME_ATTRIBUTE_VALUE|CONTAINS|firstname|FirstName|100* If the name attribute *(CONCEPT_ VALUE)* of the input field *CONTAINS firstname* then the probability is 100% that the input field should be filled out with the first name *(FirstName)* of the user.

- *UPPER_NAME_ATTRIBUTE_VALUE|CONTAINS|firstname|LastName|8*1
  If the name attribute *(UPPER_CONCEPT_ VALUE)* of the input field which is above the current input field *CONTAINS firstname* then the probability is 81 % that the input field should be filled out with the last name *(LastName)* of the user.

- *CURRENT_LABEL|CONTAINS|address|AddressStreet1|46*
  If the string left to the input field *(LEFT) CONTAINS address* then the probability is 46% that the input field should be filled out with the *address street 1 (AddressStreet1)* of the user.

Based on the foregoing mechanism EP 05109753.3 suggests to automatically fill input forms. Details may be found in this application, which is incorporated herein by reference.

In the application EP 05109753.3 it is described that a downloaded webpage is parsed and there is created a corresponding object structure by checking every input field. This object structure is then used for checking whether a certain rule is fulfilled, e.g. by comparing the pattern of a rule with the pattern of an object structure. If there is a match, the rule is regarded as being fulfilled. For details reference is made to EP 05109753.3.

The mechanism disclosed in EP 05109753.3 may be used for automatic form filling. However, as practical experiments have shown, there may be cases where a single condition in each rule is not sufficient to express more complex contexts related with forms, especially in Japanese web sites. This often happens in case where an input field for one concept name is divided into more than one input field and/or related labels are not placed in a single place.

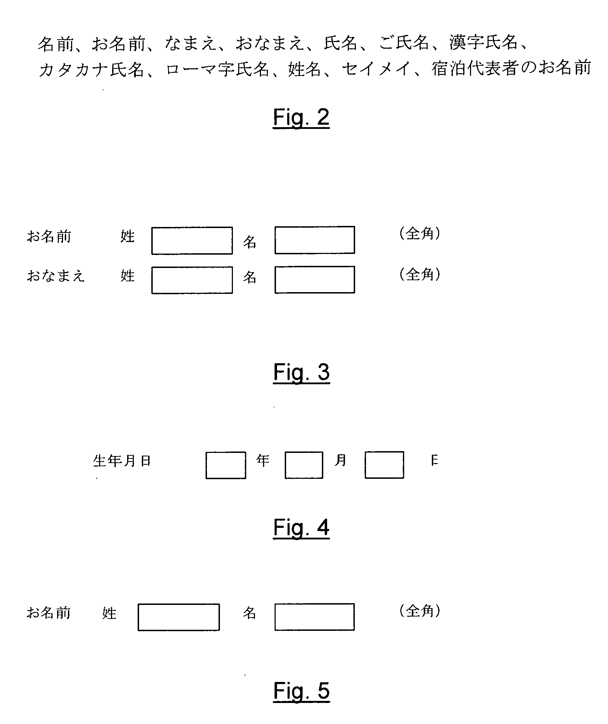

Through an analysis of a plurality of web pages in Japanese, which include input fields of user data, it was found that a rule syntax as defined in the earlier application EP 05109753.3 is sometimes not sufficient. The complexities in Japanese web pages are caused by the following several reasons. Firstly there are many expressions of the same meaning, or there are also the cases where the same expressions have different meanings. The name is a typical example. Figure 2 gives different expressions for full name, i.e., labels, which can be found in the analyzed Japanese web sites. They read, from top left to right bottom, *namae, onamae, namae, onamae, shimei, goshimei, kanji shimei, katakana shimei, romaji shimei, seimei, shukuhaku daihyousha no onamae,* and all of them mean "name". One of the labels for the name (read "namae") is used to express only first name in a certain context.

Another complication comes from the fact that there is a different set of characters, such as 'Kanji' (Chinese characters), 'Hiragana' (Japanese alphabets), and 'Katakana' (Japanese alphabets for foreign origin words), as well as different character codes for 8 bits characters 'Hankaku' 半角 ( written in Kanji) and 16 bits characters 'Zenkaku' (全角 written in Kanji). The 16 bits character codes are mainly for Kanji and Hiragana. However 16 bits character codes are also assigned for alphabetical and numerical characters. 'Katakana' can be also expressed in both 16 and 8 bits character codes. Figure 3 gives a typical example of a webpage input form requiring last name and first name in different characters. The first labels of the lines, 'お名前' (name written in Kanji) and 'おなまえ' (name written in Hiragana) implies which characters shall be used. The right labels '(全角 )' shows it shall be in 16 bits characters (even though Kanji and Hiragana can be expressed only in 16 bits). With combining all information given as the multiple labels in the different positions, an automatic form filling method should arrive at the decision that the information to be filled into the form are '姓 ' (i.e. last name) and '名 ' (i.e. first name) in Kanji in 16 bits characters for the first line and in Hiragana in 16 bits characters for the second line.

It happens often that the required information is divided into more than one input field. When the birthday is asked to fill, there may be three input fields for each year, month, and day as shown in Figure 4. The first label 生年月日 ' (i.e. birthday) is applied to all three input fields. Each label located in the right hand of each input field means year, month, and day. Another point to be considered is some labels are placed after the input fields.

From the analysis of the complexities of web forms to be filled, especially in the Japanese language, one may arrive at the conclusion that an automatic form filling method which bases its decision which information to be filled into the field on their labels should take account of:

(i) not only one label, but also additional labels associated with a target input field,
(ii) right side labels in addition to left side labels, and
(iii) semantic meaning and relationships of labels.

If one analyzes typical web forms on finds that typically up to three labels away from the field to be filled could be important for filling the field with collect information in most of the cases. For example, when the second input field highlighted in Figure 5 is the target, the labels to be considered are the first left label '名 ', the third left label お名前 ', and the first right label '(全角 )'. However the second label '姓 ' is not applicable for the second field, but only for the first input field. It means that the rules based on which the decision is made which concept name should be used to fill a certain input field should consider semantic meanings behind of the labels to decide whether they give proper information or not. The rules may express AND conditions semantically. Such a rule could consist in defining the content of the labels of the input fields and their positions, and if the definition given in such a rule matches with an input field this means that the concept name corresponding to this rule should be used to fill the input field. In the example of Fig. 5 the concept name shall be the first name in Kanji, if the first left label is '名 ', the third left label 'お名前 ', and the first right label ' (全角 ) '. However, as discussed, Kanji can be only expressed in 16 bits character codes, not in 8 bits. The first right label ' (全角 ) ' is not needed because of redundant information. Therefore a sufficient and more suitable rule could be the concept name shall be the first name in Kanji, if the first left label is '名 ', the third left label 'お名前 '.

In the following there will be explained the structure of some rules which may be applied to fill a form as given in Fig. 5. The rule structure is very similar to the one described in the aforementioned application EP 05109753.3 . A rule basically consists of the structure Position | Condition | Value, whereas the position means an indication of the position of one or more labels, the condition indicates which values the labels at the previously indicated positions define, and the "concept name" is the conclusion to be drawn from this rule, namely the concept name to be filled into the form if the previously indicated condition or conditions are met.

In order to take into account the fact that there are more than one input fields to be filled which somehow are related to each other, like in case of a name which consists of a first name and a last name, one could consider this by combining a plurality of rules using AND conditions.

For such rules the new rules syntax could be:

(AND conditions) + = concept name Probability

Hereby '(AND conditions) +' means there is one or more than one condition.

The format of AND conditions is:

Position |Condition| Value, hereby

- Position = {L1, L2, L3, R1, R2, R3, UPPER_LABEL, LOWER_LABEL, CURRENT _NAME_ ATTRIBUTE, UPPER_NAME_ATTRIBUTE,LOWER_ NAME_ATTRIBUTE}
- Condition = {CONTAINS, EQALS}

One can see that the new syntax just combines multiple conditions by AND relations. One should mention here that the terms L1, L2, L3 indicate the first left label (i.e. the closest label left to the input field), the second left label (i.e. the label second farthest on the left side from the input field) and the third left label i.e. the label third farthest on the left side from the input field). R1, R2, and R3 have the same meaning but relate to the labels right of the input field. In the example of Fig. 5, L1 would be 名 , L2 would be 姓 and L3 would be お名前 if the positions indicated by L1, L2, and L3 relate to the input field highlighted in Fig. 5. The position of the field to which the position indications in the rule relate is actually the position of the input field to which the rule applies, so in this example the highlighted input field in Fig. 5.

Given the foregoing a rule for an input field such as the highlighted one shown in Fig. 5 may look as follows:

L1 |EQUALS|名 |L3|CONTAINS| 名前 |R1|CONTAINS|全角 |=FirstNameKanji|85, or

L1 |EQUALS|名 |L3|CONTAINS| 名前 |=FirstNameKanji|80

The numbers "85" and "80" indicate the probability (in percent or by some other measure) with which the found concept name is the correct one, as examples. A certain value of probability is assigned to each rule. Moreover, instead of the "probability in percentage" it may indicate just a score (a numerical value) as an indication of probability.

To reflect the knowledge about how to fill input fields by certain rules and to create such rules requires that common text strings (or "patterns") are identified in the input fields which are used in existing forms. However, finding common text strings in Japanese web sites, specifically in labels of input fields, to be used in rules is more difficult than in case of English. This is because there are several expressions for the same meaning, as explained before in connection with Fig. 2. In the case that one can find a common text sub-string in different rules for the same concept name, the rules can be merged into one by using the sub-string and put higher probability (e.g. accumulation of probabilities of the merged rules). In this way, one may improve a rule set.

The extended rule syntax based on AND conditions of labels as described before is useful if all given conditions are met, however it does not allow finding a rule with a higher number of occurrence, which is mapped to probability or a score.

In order to more efficiently deal with such cases a different approach may be followed as will be explained in the following by several embodiments.

SUMMARY OF THE INVENTION

According to one embodiment there is provided an apparatus for automatically filling web-based forms on mobile devices comprising:

an input group recognition module for analysing a web-based form to detect a group of input fields and to generate an object to represent said group of input fields by one or more parameters describing or defining the neighbourhood of said input fields belonging to said group;

a rule repository comprising a plurality of rules whereas a rule comprises a condition to be checked and a corresponding conclusion to be drawn, said rule repository comprising a plurality of group rules for which the conclusion being drawn if a rule is found to be fulfilled is a group concept name which corresponds to a distinct semantic meaning of said group of input field and which identifies a set of inner concept names as the values by which the fields belonging to said group of input fields are to be filled, said rule repository further comprising a plurality of inner rules comprising a condition to be checked and a corresponding conclusion to be drawn, whereas the conclusion to be drawn by said inner rules corresponds to the order by which the inner concept names are to be used to fill the input fields belonging to said group;

a group rule inspecting module for evaluating said group rules by trying to match said group rules to said object representing said group to identify a group concept name corresponding to said group to thereby identifying a set of inner concept names which should be used to fill the input fields belonging to said group of input fields;

an inner rule inspecting module for evaluating said inner rules by trying to match said inner rules to said object representing said group of input fields to thereby identify the order by which the input fields belonging to said group should be filled with said set of inner concept names corresponding to said group concept name identified by said group rule inspecting module;

a user data filling module for automatically filling the input fields belonging to said group by the values corresponding to said inner concept names in accordance with the order as determined by said inner rule inspecting module.

The splitting of the form filling into detecting a group, recognizing a group concept name and then for said detected group concept name a corresponding order of inner concept names may achieve an improved recognition result with utilizing information of multiple labels within the detected input group.

According to one embodiment a group rule comprises:

a plurality of parameters appearing in the neighbourhood of said input fields belonging to said group, said plurality of parameters having to be present in the neighbourhood of said input fields of said group if said group rule is to be fulfilled.

According to one embodiment an inner rule comprises:

an order of parameters appearing in the neighbourhood of said input fields belonging to said group of input fields, or
the number of input fields belonging to said group of input fields.

According to one embodiment said group recognition module comprises:

a module for applying a check for a start boundary and an end boundary to determine an input group as those elements of the web-based form which lie within these boundaries.

According to one embodiment said boundaries are one or more of the following:

a new line tag or a table tag;
a tag designating the beginning of a table row;
a tag designating the end of a table row;
a coordinate value defining an upper boundary of a row;
a coordinate defining a lower boundary of a row
a coordinate defining a right boundary of a row;
a coordinate defining a left boundary of a row.

According to one embodiment said group recognition module comprises:

a module for evaluating a plurality of input group candidates as to whether one or more of them may be combined into an extended input group; said module for evaluating comprising:

a module for checking whether an input group candidate partially matches with one or more input group rules;
if a partial match is detected, check for other of said input group candidates whether there is a partial match with other parts of the group rule or group rules for which a partial match has been found;
repeating said checking for further input group candidates until a group rule has been completely matched by said partial matches, and
if such a complete match has been achieved, combining the candidate input groups which contributed to said complete match into a single extended input group.

According to one embodiment said candidate input groups consist of single input fields.
According to one embodiment said input group recognition module comprises:

a layout interpreter module for determining the co-ordinates of the elements of the input form;
a layout rule module which based on one or more layout rules taking into account the co-ordinates of the elements of the input form determines which elements should be combined to form an input group.

According to one embodiment said layout rule module bases said determination on one or more thresholds for the locations of elements in horizontal and/or vertical direction to decide whether they should be combined into an input group.
According to one embodiment said group rules take the form of requiring for a group rule to be fulfilled that the input group contains a plurality of distinct labels defined in said input group rule, whereas said labels may be at any location of said input group.
According to one embodiment a group rule and/ or an inner rule comprises an associated score, and
if a plurality of rules for which the score indicates a probability of less than 100 percent match with the input group the concept points of the different concept names are summed up and the concept name having the highest score is selected.
According to one embodiment an input group is represented by an object structure and an evaluation of a group rule consists in checking whether the group rule matches with the object structure corresponding to said input group.

## BRIEF DESCRIPTION OF THE DRAWINGS

Fig. 1 schematically illustrates the configuration of an apparatus according to an embodiment of the invention

Fig. 2 schematically illustrates a plurality of expressions having essentially the same meaning for an input field for 'Name' in different input forms (or different websites)

Figs. 3-5 schematically illustrate input fields which may be used in connection with embodiments of the invention.

Fig. 6 schematically illustrates a configuration of an apparatus according to an embodiment of the invention.

Fig. 7 schematically illustrates a configuration of an apparatus according to a further embodiment of the invention.

Fig. 8 schematically illustrates a configuration of an input group recognition module of apparatus according to an embodiment of the invention.

Fig. 9 schematically illustrates a configuration of an input group recognition module of apparatus according to a further embodiment of the invention.

Fig. 10 schematically illustrates a configuration of an input group recognition module of apparatus according to a further embodiment of the invention.

## DETAILED DESCRIPTION

Let us now turn to the task where a plurality of input fields together form a certain piece of information belonging together, such as a name consisting of a first name and a last name, or a date of birth consisting of day, month and year. Here one has to find rules for such "multiple input fields" belonging together which are closely related.

One may consider only labels and input fields in the same line, or in the same row in a table. For that purpose one may refer to the source code of the input form. For example, a line may be defined as one sequence divided by <BR> tag, and a row in a table may be defined as one sequence started by <TR> (defining the opening of a table row in html) and closed by </TR> tag (which defines the closing of a table row) in a HTML source.

In general, grouping of input fields and identifying associated information can be done by detecting location information, which may be found in a source code in different levels. In a simple case, a line may be defined as one sequence ended by tags to start a new line, e.g., such as <BR> tag, or tags to define a row in a table, e.g., <TR> tag. In a more sophisticated case, coordinates information can be used.

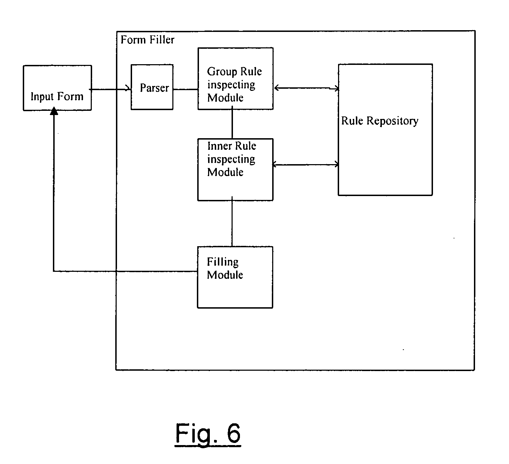

According to one embodiment there is provided a form filling apparatus as shown in Fig. 6. An input form is fed to the form filling apparatus where it is at first received and processed by a parsing module. The parsing module has the task of identifying groups of input fields which belong together and to which then later so-called group rules are to be applied. A group of input fields contains input fields which together belong to a common generic input data which will late be referred to as group concept name. A group concept name corresponds to a set of inner concept names which should be used to fill the individual fields belonging to a group. A group concept name may for example be "name", the individual fields being first name and last name. Another example would be "birthday" or e.g. "card expiration date", where the individual inner concept names would be year, month and day.

The identification of groups by the parser may be done by identifying those input fields which are in the input form within an approximate location, e.g., html source divided by <BR> or located between <TR> and </TR> tags as mentioned before

Once a group of input fields has been identified by the parser and a corresponding object structure has been generated, the group (or the corresponding object structure representing the group) is forwarded to a group rule inspecting module. The group rule inspecting module evaluates a plurality of group rules which have previously been stored in the rule repository. By trying to match the group rules with the input group identified by the parser a group concept name is identified. This may either be done by a group rule giving a perfect match and a probability of 100 percent, or several group rules which match but which have lower certainties may be evaluated and their cumulative score may be determined as in previous embodiments. As result of the group rule evaluation there is obtained a "group concept name" which is an identification of the group by a distinct semantic meaning and which has corresponding and pre-assigned to it a set of individual inner concept names which will then later be used to fill the fields belonging to the group.

Once the group concept name has been identified the result is forwarded to the inner rule inspecting module shown in Fig. 6. This module has the task of identifying the order in which the inner concept names corresponding to the group concept name should be used to fill the input fields belonging to the group. This is done by evaluating so-called inner rules (inner rules of the identified group concept name) which by evaluating them may be used as basis for deciding about the order in which to use the inner concept names for filling the input fields. Once this evaluation has been carried out, the filling module then carries out the actual filling of the input form by referring to the actual values which are stored for the user as values of the inner concept names which belong to the selected group concept name and by filling the input fields of the group using these values in the order as defined by the inner group rule for which a match was found. According to one embodiment the inner rule giving the first match (when checking one rule after another) is selected. In this case one can prioritize inner rules by their order.

When describing this approach compared to the embodiments in EP 05109753.3 not using group concept names one may say that concept names (as described in the previous approach not using the group concept) are grouped together as a set which contextually belongs together because the concept names thus grouped can be represented by a common "group concept" and accordingly by a "group concept name". A group concept name therefore is a kind of a "generalized" concept name which designates a set of individual concept names as belonging to the group. The individual concept names belonging to such a group may be referred to as "inner concept names", whereas the concept name designating the whole group may be referred to as group concept name. A group concept name may e.g. be the "day of birth", with the inner concept names "day", "month" and "year". Another example would be the group concept name "Name" which may have as associated inner concept names "First Name" and "Last Name".

As described before this embodiment is based on detection of an input group that consists of more than one input field. For example, input fields located in the same table line can be considered as an input group. In HTML web pages, often table tags are used to place input fields semantically related labels. By detecting table tags input groups can be detected. As a more sophisticated technique, that even works on web pages that are not using table tags, coordinates information can be used to judge if labels and input fields are placed in the same line and are considered as an input group, as will be explained in somewhat more detail later. Once an input group is detected, the algorithm (and the apparatus implementing it) proceeds with the following two steps: (i) to determine a concept name for an input group, and (ii) to determine a concept name of each input field for a selected group. In the step (i), according to one embodiment there are only considered the appearance of label(s) in the input group. In the step (ii), there is taken account of the order of the labels or the number of the input fields in the group.

Compared to previous embodiments the identification of the concept names therefore now is split into three individual steps: to detect an input group, to identify a whole concept name for an input group and to specify each concept name for each input field. This enables defining rules with higher probability, which leads to more probable user data in a simple manner.

In the following there will be described a further embodiment in somewhat more detail. As mentioned before, there are introduced Input Group rules, which take account of the whole group of input fields. As a simple recognition of an input group, <TR> and </TR> tags used for TR elements in a table can be considered as a starting point and an ending point of the group respectively and one considers an input group if it includes at least one input field. In one implementation of automatic form filling for Japanese, there are only used </TR> tags for recognition of input groups as an ending point of the current input group and a starting point of the next possible input group (only if there is at least one input field). This is because <TR> and </TR> tags are used quite often in a complex manner, for example several subtables in a table. In this case there are missed some information if one considers a <TR> tag as a starting point of an input group. Of course, treating nests of table tags may improve recognition. However, other more sophisticated recognition techniques of an input group may also be used as will be discussed later.

Coming back to the examples shown in Figure 3 and 4, each line may be considered as an input group. As the first step, there is considered a concept name of the group, such as a group of Name Kanji, Name Hiragana, or Birthday. As the second step, it is analyzed what concept name shall be applied to each input field, e.g. First Name or Last Name in Name Kanji group, based on the order of labels. There are introduced the following two rules.

    (i) Input Group rule to specify a concept name for an input group
    (ii) Inner rule to specify a concept name of each input field for a selected group

It should be noted that according to one embodiment Input group rules treat only labels, but not name attributes of input fields.

In the following there are described examples for the rule syntax and the algorithm used for input groups. The syntax for Input Group rules may look as follows:

    **Input_Group| Condition | Value | | =Group concept name | [Probability]**

    In plain text this rule may be described as: If labels of the Input Group have a 'value' with a 'condition', then probability to select Group concept name x is y %

    The "probability" or "score" of a rule may be optional, and rules may in one embodiment also contain no score. The value of probability may be null.

    The rule specifies conditions for parameters of the input groups, whereas the "parameters" here are the labels of the input fields or any labels inside the input group.

    •   Condition = {CONTAINS, EQUALS}
        CONTAINS means that at least one label inside of the input group contains a given value.
        EQUALS means that at least one label inside of the input group equals a given value.
    •   Group concept name = concept name of the group to be applied to the group of more than one input field

• Probability = value, from 0 to 100

A group rule typically has more than one condition, i.e. AND conditions. The one with n conditions is described as follows:

Input_Group Condition_1 | Value_1 |...| Input_Group | Condition_n | Value_n |=Group concept name | [Probability]

This means that for such a group rule to be fulfilled the group must include labels with values 1 to n somewhere within the group.

Now a more concrete example of a rule according to the above syntax is given. In this example (And conditions) introduced before (which may also be referred to as "cumulative conditions") are applied to Input Group rules.

• *INPUT_GROUP\CONTAINS\名前 \INPUT_GROUP\CONTAINS\ふりがな \=na mehiragana_group\100*

If labels of the Input Group contains 名前 *(name)* and ふりがな *(hiragana),* then probability to select *Name Hiragana_group* is 100%

• *INPUT_GROUP|CONTAINS|名前 |INPUT_GROUP|CONTAINS||=namekatakana_group|100*

If labels of the Input Group contains 名前 *(name)* and カタカナ *(katakana),* then probability to select *Name Katankana_group* is 100%

One should note that there are no location indications given in the rules above. This means that the group rules do not specify the location of the labels but rather just specifies the actual labels (the "text" of a label) and that they have to be present within a group if a rule is to be regarded as being fulfilled. It will be apparent that this requirement is less severe than for the rules described in previous embodiments where location information was specified in the rules. In this manner it becomes easier to design rules for groups having multiple input fields compared to those rules where the locations of labels have to be considered.

However, while the requirement has been relaxed compared to previous embodiments by omitting location information, the requirements in the rules are stricter in the sense that a rule defines more than one parameter (label) which have to be present cumulatively.

On the other hand, by suitably recognizing the input groups (by detecting their boundaries and thereby their elements) it becomes more likely that the elements of an input group contain relevant information for which a matching group rule exists as compared to the previous approach which required the location of labels to match with a rule. In the present embodiment the location of an element is not relevant, as long as it belongs to a recognized group.

It will become apparent for the skilled person that such a mechanism can also be applied if a group contains only a single input field. In this case also the elements of an input group are those which lie within the boundaries defining the input group, and then a location independent group rule check can be performed as described to find those group rules where the conditions of the rules are fulfilled. Once a group rule has been selected as the one giving the best match (and the corresponding group concept name having thereby been selected), the inner rules are checked. In case of a single input field belonging to the group this has in one embodiment the effect that the values of the inner concept names are merged according to a predefined scheme into a single value to fill the input field.

One can apply the same algorithm as in the previously described embodiments to lead to the highest probable concept name of the group by adding up the scores of rules which belong to the same group concept name and which all have been fulfilled. On the other hand, if one finds a rule with 100% probability for a given group, it is applied in a straightforward way. Otherwise the score for each concept name is accumulated according to matching rules and the group concept name the highest accumulated score is selected after analyzing all applicable rules.

If the probability value is null, the first selected rule may be applied. Thus the order of the rules for the same group concept name may represent a prioritization.

Based on the recognition of input groups according to the mechanism described before the group rules are checked to identify the most appropriate group concept name.

After selecting a group concept name, Inner rules are applied to specify what concept name shall be applied to each input field. According to one embodiment there are two types of Inner rules.

(1) Concrete Inner rules

Concrete Inner rules specify the order of labels appeared in a group and the list of concept names accordingly. Input fields are filled with the order of concept names one may specify the rule syntax as follows.

Label_1 | Label_2 | ...| Label_n => concept name_1 | concept name_2 | ...| concept name_n

If labels of an input group appear in the order of Label_1, Label_2, ..., Label_n, n input fields shall be filled with the order of concept name_1, concept name_2, ..., concept name_n.

In the following there are shown two examples for *Name Hiragana_group.*

• 姓|名 =>*Last Name Hiragana, First Name Hiragana*

If labels of an input field appear in the order of 姓 (last name) and 名 (first name), two input fields are filled with the concept name, *Last Name Hiragana* and *First Name Hiragana.*

• 氏|名 => *Last Name Hiragana, First Name Hiragana*

If labels of an input field appear in the order of 氏 (last name), 名 (first name), two input fields are filled with the concept name, *Last Name Hiragana* and *First Name Hiragana.*

(2) Numeric rules

Numeric rules specify based on the number of input fields in an input group, without taking account of labels. A numeric rule just determines how many input fields n belong to an input group. The rule may then look as follows:

> n => concept name_1 , concept name_2 , ..., concept name_n
> If there are n input fields in a group, they are filled in the order of concept name_1, concept name_2, ..., concept name_n.

Below there are shown two examples of *Telephone_group.*

> • *1=>Tel1 + '-' + Tel2 + '-' + Tel3*
> If there is only one input field in a group, it is filled with *Tel1-Tel2-Tel3.*
> • *3=>Tel1 , Tel2, Tel3*
> If there are three input fields in a group, they are filled in the order of *Tel1, Tel2, Tel3.*

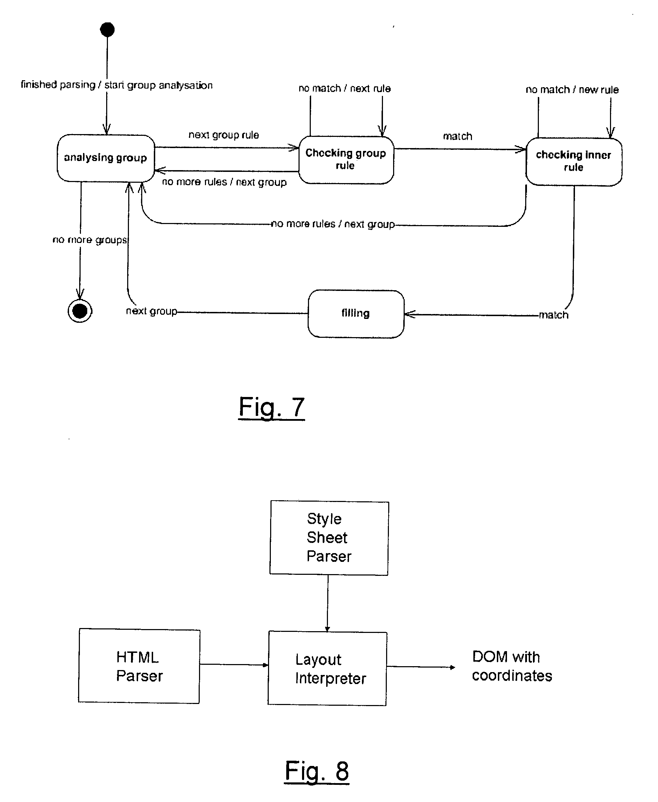

According to one embodiment the Form Filler operates by carrying out the following three steps; input group detection (determining the elements of an input group), input group recognition (determining a group concept name), and inner rule detection. (corresponding to input order detection that leads how to fill the input fields with the inner concept names). The Figure 7 shows a state diagram for input group recognition and filling according to an embodiment of the invention which now will be explained in somewaht more detail.

(1) Input Group detection (Analyzing Group)

The HTML Parser analyses a downloaded Web page and creates an object structure for each input group that may include more than one input field. One simple implementation is to use table elements to detect input groups. Enhanced input group detection may be done by using exact location of labels and input fields, semantic relationships among labels, and so on. This will be outlined in more detail below. The created object structure includes all input fields in the input group, and their labels. According to one embodiment this may include all text strings which are included within the boundaries of a group. The input group detection may be executed by a module separate from the parser which uses the result from the parser to identify the fields which together should form an input group and to form an object structure for that input group (including the labels or any text strings belonging to the input group) which allows then to try to match rules to this structure to check whether the rules are fulfilled. The resulting object structure is then such that it may be tried to match with a group rule to check whether a group rule is fulfilled. Moreover, it should also be possible to then check inner rules based on the object structure as will be described later. The object structure for that purpose is a representation of the elements belonging to an input group and it contains the necessary information in a defined structure to enable the execution of a rule check by trying to match the rule to this structure.

(2) Input Group recognition (Checking Group Rule)

The Group Rule Inspector searches group rules applicable to a given object structure. If a rule with 100 % probability is found, the correspondent group concept name is selected. If a rule with less than 100 % probability is found, concept points are summed up for each group concept name. The group rules are then tried one after another and in case of a match the points are increased according to the score of the group rule. Finally a concept name group with the highest concept point score is selected.

(3) Inner Rule Detection (Checking Inner Rule)

The User Data Filler fills the input fields with user data according to the inner rules for the selected concept name group. It determines applicable concept name for each input field based on the order of labels. It detects the order of labels specified in the Concrete Inner rules. In the case of telephone number, fax number, and post code, it is possible to detect whether all information shall be concatenated or split based on the number of the input fields, by using numeric rules. The inner rules may also be tried one after another until a match has been found and then the input group is filled accordingly.
In the special case that the group comprises only one input field the corresponding input field is filled by the values belonging to the inner concept names belonging to this group. In case the group concept name being "birthday" and the inner concept names being year, month and date, the single input field is then filled by combining the multiple inner concept name values into a single text string.

Operations (1) to (3) are carried out respectively for each input group identified by the group detection module until all input groups have been checked.

According to one embodiment the input group recognition comprises the detection of boundaries (a start and an end) and everything within the boundaries is considered to belong to the corresponding input group, including not only the input fields but also the labels of the input fields and any text strings lying within the boundaries. As already mentioned before, e.g. <TR> and </TR> tags in the HTML source code may be used for this purpose, and everything lying within such tags may be regarded as belonging to the input group. For the detected input group (or its representation by an object structure) it is then checked whether it matches with one or more group rules to determine the correct group concept name.

Another approach for recognizing an input group and its elements based on coordinates will be described later. However, it will be understood that the recognition of a group which is based on determining the content which lies within certain boundaries does not necessarily mean that a plurality of input fields has to lie within these boundaries. Therefore, a "group" which is detected on such a boundary mechanism like the tags mentioned before or on coordinates described later may not only contain multiple input fields but may also contain only a single input field.

As mentioned, according to one embodiment, every text string (or label) lying within the boundaries used for group recognition is regarded as belonging to an input group.

In the following there will be described possible enhanced recognition techniques for input groups according to embodiments of the invention. A first recognition technique is based on merging or extending input groups.

One may identify extended input groups not only by detecting table tags, but also by considering semantic relationships among input groups. This may be done by using input group rules for recognition of extended input groups. The recognition algorithm may include the following steps.

(1) Detect a candidate input group, e.g. by analyzing table tags.
(2) Lookup input group rules.
(2-1) If there are rules partially fit to this input group, start to build an extended input group by using the candidate input group as a starting point and applying the partially matched rules.
(2-2) If not, delete the input group.
(3) In the case of (2-1), check if the next candidate input group fits to other parts of the above rules.
(4) Repeat until the one of the following conditions is satisfied.
(4-1) The whole rule is matched, then a group of candidate input groups is considered an extended input group.
(4-2) There is an input group, which does not match to the rule, then delete the input group.

It will be understood that the foregoing algorithm may even be applied if the candidate input group contains only a single input field. In other words, this algorithm may be used to actually identify those input fields which should be combined into input groups (because they ultimately contribute to a complete match with a group rule) and those for which this is not the case and which therefore should be treated as individual input fields for which no group concept name should be searched but just an individual concept name.

The algorithm may therefore use as input the individual candidate groups (which may contain only single input fields) which have been found by the parser parsing the input form. Based thereupon the algorithm may detect extended input groups by combination of candidate input groups.

This algorithm will now be described in somewhat more detail using the example below.

Consider a table layout of a Web page as shown in the table below. It contains three rows. Each row has one input field and its own label. There is a label which is considered as the overall label for this group, i.e., "Address".

Table 1. Example of a table layout

| address | Street | Field 1 |
|---------|---------|---------|
|  | City | Field 2 |
|  | Country | Field 3 |

Consider there is a following input group rule:
*INPUT _ GROUP|contains|Street|INPUT_ GROUP|contains|City|*

*INPUT GROUP|contains|Country|=address_group*

With the step (1) of recognising an input group, the first line is considered to be an input group. Since there are no rules for it, but it partially fits the rule (*INPUTGROUP|contains|Street...*) the algorithm starts to a build an extended input group. For the next two groups there is also a part of the rule which fits *(City* and *Country).* Therefore the algorithm considers the whole table block to be a single extended input group.

The previously discussed techniques for input group detection by using table tags apply on a very early stage of the html parsing but they do not work for websites without table layouts. Therefore in the following there will be described an embodiment using a somewhat sophisticated technique working for every website by using coordinates of HTML elements. In contrast to the table tag based recognition, it requires layout interpretation of web sites.

Figure 8 shows functional blocks to retrieve co-

ordinates of HTML elements (i.e., labels and input fields). The layout interpreter is the core component that retrieves an object structure from the HTML parser and style definitions from the style sheet parser, and creates an extended object structure including coordinates. Based on the thus obtained coordinates one can carry out a determination as to which input fields belong to an input group.

This may be carried out by a layout rule module which checks one or more layout rules to determine which elements should be combined into an input group.

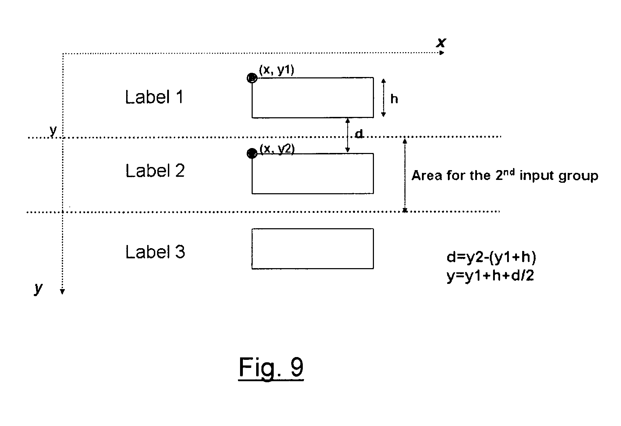

For example, the following calculation can be applied to recognise an input group in the same line by using co-ordinates of labels and input fields. To form a group of fields and labels, an area shall be defined with taking account of thresholds for their distances from the upper and the lower lines. In Figure 9, there is assumed that the 1st input field has $(x, y_1)$ co-ordinate, the 2nd input field $(x, y2)$ co-ordinate, and the height of the 1st input field is h. One can calculate vertical distance between the upper and lower input fields. In this example, the distance between the 1st and the 2nd input field is:

$$d=y2-(y1+h)$$

The y co-ordinate of the upper border of the 2nd input group area is:

$$y=y1+h+d/2$$

All labels (i.e., any text strings) and input fields with co-ordinates inside of this area (between y= 0 and $y=y1+h+d/2$) can be considered as an input group. With the same way, all other borders can be calculated. It should be noted that the given formulas are only examples. Depending on the definitions of thresholds to detect areas, one may apply various formulas. The technique shown here is used to find lines, but can be applied to columns as well. Furthermore, this idea can be used together with the technique of combining candidate input groups described before.

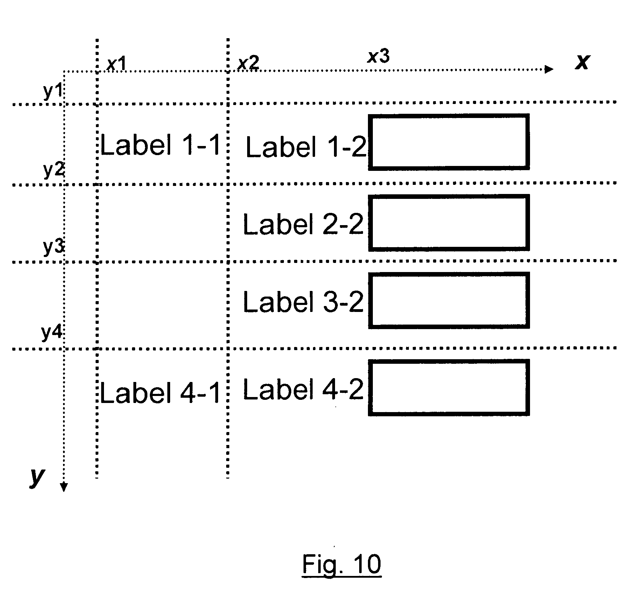

In the following there will be described a further embodiment using another mechanism for implementing the group recognition function in connection with Fig. 10.

In this embodiment vertical and horizontal coordinate information can be used to detect an extended input group. As the first step, the vertical coordinates are used to detect a group of input fields and labels in the same line with taking into account thresholds for their distances from the upper and the lower lines. As the second step, the horizontal coordinates are used to detect an extended group. In Figure 10, each $y_n$ is defined by vertical coordinates. Each $x_n$ can be also defined by horizontal coordinates. Label 1-1 can be an overall label for the 1-3 lines, because only Label 1-1 is standing in the position $x_1 < x < x_2$. However in the 4 line, there is Label 4-1 standing in the position $x_1 < x < x_2$. Thus one considers a group including the input fields and labels in the 1-3 lines as an extended input group.

The idea for combining multiple input groups into an extended input group in the foregoing example is based on the assumption that an extended input group may have a representative label to be applied to the all input groups. In the given example the representative label in the first column actually shows up only in the first line and is valid for all other lines below until in this column a new label shows up. Based on this reasoning the lines may be combined into an extended input group.

It should be mentioned that the invention hereinbefore has been described by exemplary embodiments to which modifications are possible for the skilled person. E.g., it would be possible to implement the form filling module as a component of a browser or a mobile phone itself instead of as a proxy. Moreover, the automatic form filling module may be implemented on a portal which may be accessed by a mobile device or even by a standalone computer via a computer network such as the internet. Or, to improve the acceptance and to minimize the hurdle for the usage of this feature, the form filling may be implemented as a default function of the mobile phone to avoid users spending time downloading it. Moreover, people might not necessarily think about downloading this function when accessing web forms.

The skilled person will understand that the embodiments and their components, processes or modules as described hereinbefore may be implemented by hardware or by software or a combination of them. In particular, modules operating to execute procedural operations as explained in connection with the previous description may be implemented by one or more computer programs running on a computer or any computing device such as a mobile phone, a smartphone, a standalone PC, a PDA, or the like.

**Claims**

1. An apparatus for automatically filling web-based forms on mobile devices comprising:

    an input group recognition module for analysing a web-based form to detect a group of input fields and to generate an object to represent said group of input fields by one or more parameters describing or defining the neighbourhood of said input fields belonging to said group;
    a rule repository comprising a plurality of rules whereas a rule comprises a condition to be checked and a corresponding conclusion to be drawn, said rule repository comprising a plurality of group rules for which the conclusion being drawn if a rule is found to be fulfilled is a group concept name which corresponds to a distinct semantic meaning of said group of input fields and which identifies a set of inner concept names as the values by which the fields belonging to said group of input fields are to be filled, said rule repository further comprising a plurality of inner rules comprising a condition to be checked and a corresponding conclusion to be drawn, whereas the conclusion to be drawn by said inner rules corresponds to the order by which the inner concept names are to be used to fill the input fields belonging to said group; a group rule inspecting module for evaluating said group rules by trying to match said group rules to said object representing said group to identify a group concept name corresponding to said group to thereby identifying a set of inner concept names which should be used to fill the input fields belonging to said group of input fields; an inner rule inspecting module for evaluating said inner rules by trying to match said inner rules to said object representing said group of input fields to thereby identify the order by which the input fields belonging to said group should be filled with said set of inner concept names corresponding to said group concept name identified by said group rule inspecting module; a user data filling module for automatically filling the input fields belonging to said group by the values corresponding to said inner concept names in accordance with the order as determined by said inner rule inspecting module.

2. The apparatus of claim 1, wherein a group rule comprises:

a plurality of parameters appearing in the neighbourhood of said input fields belonging to said group, said plurality of parameters having to be present in the neighbourhood of said input fields of said group if said group rule is to be fulfilled.

3. The apparatus of claim 1 or 2, wherein an inner rule comprises:

an order of parameters appearing in the neighbourhood of said input fields belonging to said group of input fields, or the number of input fields belonging to said group of input fields.

4. The apparatus of one of claims 1 to 3, wherein said group recognition module comprises:

a module for applying a check for a start boundary and an end boundary to determine an input group as those elements of the web-based form which lie within these boundaries.

5. The apparatus of claim 4, wherein said boundaries are one or more of the following:

a new line tag or a table tag; a tag designating the beginning of a table row; a tag designating the end of a table row; a coordinate value defining an upper boundary of a row; a coordinate defining a lower boundary of a row; a coordinate defining a right boundary of a row; a coordinate defining a left boundary of a row.

6. The apparatus of one of claims 1 to 5, wherein said group recognition module comprises:

a module for evaluating a plurality of input group candidates as to whether one or more of them may be combined into an extended input group; said module for evaluating comprising:

a module for checking whether an input group candidate partially matches with one or more input group rules; if a partial match is detected, check for other of said input group candidates whether there is a partial match with other parts of the group rule or group rules for which a partial match has been found; repeating said checking for further input group candidates until a group rule has been completely matched by said partial matches, and if such a complete match has been achieved, combining the candidate input groups which contributed to said complete match into a single extended input group.

7. The apparatus of one of claims 1 to 6, wherein said candidate input groups consist of single input fields.

8. The apparatus of one of claims 1 to 7, wherein said input group recognition module comprises:

a layout interpreter module for determining the co-ordinates of the elements of the input form; a layout rule module which based on one or more layout rules taking into account the co-ordinates of the elements of the input form determines which elements should be combined to form an input group.

9. The apparatus of claim 8, wherein said layout rule module bases said determination on one or more thresholds for the locations of elements in horizontal and/or vertical direction to decide whether they should be combined into an input group.

10. The apparatus of one of claims 1 to 9, wherein the elements of an input group are determined based on horizontal coordinate boundaries, and; if based on vertical coordinates it is found that an element of an input group may be a label for multiple input groups, these multiple input groups are combined into an extended input group.

11. The apparatus of one of claims 1 to 9, wherein said group rules take the form of requiring for a group rule to be fulfilled that the input group contains a plurality of distinct labels defined in said input group rule, whereas said labels may be at any location of said input group.

12. The apparatus of one of the preceding claims, wherein a group rule and/ or an inner rule comprises an associated score, and if a plurality of rules for which the score indicates a probability of less than 100 percent match with the input group the concept points of the different concept names are summed up and the concept name having the highest score is selected.

13. The apparatus of one of the preceding claims, wherein an input group is represented by an object structure and an evaluation of a group rule consists in checking whether the group rule matches with the object structure corresponding to said input group.

14. A computer program which when being executed on a computer enables said computer to act as an apparatus according to one of claims 1 to 13.

**Amended claims in accordance with Rule 137(2) EPC.**

1. An apparatus for automatically filling web-based forms on mobile devices comprising:

an input group recognition module for analysing a web-based form to detect a group of input fields and to generate an object to represent said group of input fields by one or more parameters describing or defining the neighbourhood of said input fields belonging to said group; a rule repository comprising a plurality of rules wherein a rule comprises a condition to be checked and a corresponding conclusion to be drawn, said rule repository comprising a plurality of group rules for which the conclusion being drawn if a rule is found to be fulfilled is a group concept name which corresponds to a distinct semantic meaning of said group of input fields and which identifies a set of inner concept names as the values by which the fields belonging to said group of input fields are to be filled, said rule repository further comprising a plurality of inner rules comprising a condition to be checked and a corresponding conclusion to be drawn, wherein the conclusion to be drawn by said inner rules corresponds to the order by which the inner concept names are to be used to fill the input fields belonging to said group; a group rule inspecting module for evaluating said group rules by trying to match said group rules to said object representing said group to identify a group concept name corresponding to said group to thereby identifying a set of inner concept names which should be used to fill the input fields belonging to said group of input fields; an inner rule inspecting module for evaluating said inner rules by trying to match said inner rules to said object representing said group of input fields to thereby identify the order by which the input fields belonging to said group should be filled with said set of inner concept names corresponding to said group concept name identified by said group rule inspecting module; a user data filling module for automatically filling the input fields belonging to said group by the values corresponding to said inner concept names in accordance with the order as determined by said inner rule inspecting module.

2. The apparatus of claim 1, wherein a group rule comprises:

a plurality of parameters appearing in the neighbourhood of said input fields belonging to said group, said plurality of parameters having to be present in the neighbourhood of said input fields of said group if said group rule is to be fulfilled.

3. The apparatus of claim 1 or 2, wherein an inner rule comprises:

an order of parameters appearing in the neighbourhood of said input fields belonging to said group of input fields, or the number of input fields belonging to said group of input fields.

4. The apparatus of one of claims 1 to 3, wherein said group recognition module comprises:

a module for applying a check for a start boundary and an end boundary to determine an input group as those elements of the web-based form which lie within these boundaries.

**5.** The apparatus of claim 4, wherein said boundaries are one or more of the following:

> a new line tag or a table tag;
> a tag designating the beginning of a table row;
> a tag designating the end of a table row;
> a coordinate value defining an upper boundary of a row;
> a coordinate defining a lower boundary of a row;
> a coordinate defining a right boundary of a row;
> a coordinate defining a left boundary of a row.

**6.** The apparatus of one of claims 1 to 5, wherein said group recognition module comprises:

> a module for evaluating a plurality of input group candidates as to whether one or more of them may be combined into an extended input group; said module for evaluating comprising:
>
>> a module for checking whether an input group candidate partially matches with one or more input group rules;
>> if a partial match is detected, check for other of said input group candidates whether there is a partial match with other parts of the group rule or group rules for which a partial match has been found;
>> repeating said checking for further input group candidates until a group rule has been completely matched by said partial matches, and
>> if such a complete match has been achieved, combining the candidate input groups which contributed to said complete match into a single extended input group.

**7.** The apparatus of one of claims 1 to 6, wherein said candidate input groups consist of single input fields.

**8.** The apparatus of one of claims 1 to 7, wherein said input group recognition module comprises:

> a layout interpreter module for determining the co-ordinates of the elements of the input form;
> a layout rule module which based on one or more layout rules taking into account the co-ordinates of the elements of the input form determines which elements should be combined to form an input group.

**9.** The apparatus of claim 8, wherein said layout rule module bases said determination on one or more thresholds for the locations of elements in horizontal and/or vertical direction to decide whether they should be combined into an input group.

**10.** The apparatus of one of claims 1 to 9, wherein the elements of an input group are determined based on horizontal coordinate boundaries, and; if based on vertical coordinates it is found that an element of an input group may be a label for multiple input groups, these multiple input groups are combined into an extended input group.

**11.** The apparatus of one of claims 1 to 9, wherein said group rules take the form of requiring for a group rule to be fulfilled that the input group contains a plurality of distinct labels defined in said input group rule, wherein said labels may be at any location of said input group.

**12.** The apparatus of one of the preceding claims, wherein a group rule and/ or an inner rule comprises an associated score, and if a plurality of rules for which the score indicates a probability of less than 100 percent match with the input group the concept points of the different concept names are summed up and the concept name having the highest score is selected.

**13.** The apparatus of one of the preceding claims, wherein an input group is represented by an object structure and an evaluation of a group rule consists in checking whether the group rule matches with the object structure corresponding to said input group.

**14.** A computer program which when being executed on a computer enables said computer to act as an apparatus according to one of claims 1 to 13.

Fig. 1

名前、お名前、なまえ、おなまえ、氏名、ご氏名、漢字氏名、
カタカナ氏名、ローマ字氏名、姓名、セイメイ、宿泊代表者のお名前

## Fig. 2

お名前　　　姓 ☐　名 ☐　（全角）
おなまえ　　姓 ☐　名 ☐　（全角）

## Fig. 3

生年月日　☐ 年　☐ 月　☐ 日

## Fig. 4

お名前　　　姓 ☐　名 ☐　（全角）

## Fig. 5

## Fig. 6

finished parsing / start group analysation
no match / next rule
no match / new rule

analysing group ─── next group rule ──→ Checking group rule ─── match ──→ checking inner rule

no more rules / next group

no more rules / next group

no more groups

next group ──────── filling ──────match──

Fig. 7

Style Sheet Parser

HTML Parser ──→ Layout Interpreter ──→ DOM with coordinates

Fig. 8

**Fig. 9**

Label 1

Label 2

Label 3

(x, y1)

h

d

(x, y2)

Area for the 2$^{nd}$ input group

$d=y2-(y1+h)$
$y=y1+h+d/2$

Fig. 10

**European Patent Office**

## EUROPEAN SEARCH REPORT

Application Number

EP 06 11 7765

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/068693 A1 (RAWAT ET AL.)<br>8 April 2004 (2004-04-08)<br>* paragraph [0011] - paragraph [0014] *<br>* paragraph [0020] - paragraph [0034] *<br>* paragraph [0037] - paragraph [0073] *<br>----- | 1-14 | INV.<br>G06F17/24 |
| X | US 6 981 028 B1 (RAWAT ET AL.)<br>27 December 2005 (2005-12-27)<br>* column 10, line 47 - column 11, line 53 *<br>* column 14, line 41 - column 15, line 47 *<br>----- | 1-14 | |
| A | US 2002/062342 A1 (SIDLES)<br>23 May 2002 (2002-05-23)<br>* paragraph [0040] *<br>* paragraph [0062] - paragraph [0063] *<br>----- | 1-14 | |
| A | US 6 088 700 A (LARSEN ET AL.)<br>11 July 2000 (2000-07-11)<br>* column 4, line 59 - column 5, line 3 *<br>----- | 1-14 | TECHNICAL FIELDS SEARCHED (IPC)<br><br>G06F |

The present search report has been drawn up for all claims

| Place of search | Date of completion of the search | Examiner |
|---|---|---|
| Berlin | 18 January 2007 | Abram, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 7765

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2007

| Patent document cited in search report | | Publication date | Patent family member(s) | | Publication date |
|---|---|---|---|---|---|
| US 2004068693 | A1 | 08-04-2004 | NONE | | |
| US 6981028 | B1 | 27-12-2005 | AU | 5916201 A | 12-11-2001 |
| | | | CN | 1439133 A | 27-08-2003 |
| | | | EP | 1279116 A2 | 29-01-2003 |
| | | | JP | 2004501426 T | 15-01-2004 |
| | | | WO | 0184359 A2 | 08-11-2001 |
| | | | US | 2002156846 A1 | 24-10-2002 |
| | | | US | 2005256841 A1 | 17-11-2005 |
| US 2002062342 | A1 | 23-05-2002 | AU | 4321602 A | 24-06-2002 |
| | | | WO | 0248824 A2 | 20-06-2002 |
| US 6088700 | A | 11-07-2000 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 05109753 A